# FASCICULE DE BREVET EUROPEEN

(11) **EP 0 647 203 B1**
(45) Date de publication et mention de la délivrance du brevet: **01.10.1997**
(21) Numéro de dépôt: 93914806.0
(22) Date de dépôt: 02.07.1993
(51) Int. Cl.: B65G 47/51, B65G 27/02, B23Q 7/10, B23P 19/04, B65G 47/06

(54) **DISPOSITIF DE CHARGEMENT ET DE DISTRIBUTION DE RESSORTS ET CONDITIONNEMENT DE RESSORTS OBTENUS**
LADE-UND ABGABEVORRICHTUNG FÜR FEDERN UND BEWERKSTELLIGTE FEDERVERPACKUNG
DEVICE FOR LOADING AND DISPENSING SPRINGS, AND RESULTING SPRING PACKAGING

(30) Priorité: 03.07.1992 FR 9208265
(43) Date de publication de la demande: 12.04.1995
(73) Titulaire: SOCIETE TECHNIQUE D'AUTOMATISMES ET D'ENSEMBLES A RESSORTS - S.T.A.E.R., F-87000 Limoges (FR)
(72) Inventeur: MEYNIEUX, Jean, F-87520 Oradour-sur-Glane (FR)
(74) Mandataire: Thébault, Jean-Louis
(86) Numéro de dépôt international: FR9300681
(87) Numéro de publication internationale: WO9401353

(56) Documents cités:
- EP-A- 0 373 685
- EP-A- 0 451 344
- DE-A- 3 148 990
- US-A- 2 940 587
- US-A- 4 021 902
- US-A- 4 372 463

## Description

La présente invention a pour objet un dispositif de chargement et de distribution de ressorts en continu, plus particulièrement de ressorts de petit diamètre ainsi que le conditionnement de ressorts obtenu.

L'industrie utilise de nombreux ressorts dans le domaine mécanique et il existe un problème important généré par le produit lui-même, à savoir le ressort, car il faut en effet manipuler ces ressorts.

Or ces ressorts lorsqu'ils sont isolés peuvent être aisément manipulés, surtout lorsqu'ils sont de gros diamètre, mais dès que les diamètres sont faibles et que les ressorts sont mis en vrac, il y a une tendance à l'emmêlement.

Dans l'industrie, une solution consiste à disposer à proximité immédiate de chaque poste d'insertion de ressorts dans le dispositif mécanique dans lequel il doit être reçu, une machine à fabriquer ces ressorts.

Ainsi, les ressorts sont utilisés dès leur fabrication ce qui évite tout stockage en vrac et tout problème d'emmêlement.

Généralement, la machine à fabriquer les ressorts produit des ressorts à la vitesse d'utilisation en synchronisme. Les ressorts fabriqués sont introduits dès la sortie de la machine dans un tube guide à l'extrémité duquel sont disposés des moyens d'application et de mise en place de ces ressorts.

De tels moyens d'application et de mise en place sont décrits dans la demande de brevet FR 90 14077 au nom de la demanderesse.

De façon à faire migrer les ressorts dans le tube sur la courte distance qui sépare la machine à fabriquer les ressorts du poste de mise en place, il est prévu d'insuffler de l'air sous pression qui vient compléter l'effet de la gravité, la machine à fabriquer les ressorts étant généralement disposée à une hauteur supérieure au poste de mise en place des ressorts. De même, le document US-A-4.021.902 décrit un dispositif de stockage et de distribution de ressorts comportant un tube enroulé en spirale sur un poste fixe équipé d'un vibreur, le tube étant monté de façon permanente sur le poste.

Ce dispositif est introduit entre une machine à fabriquer les ressorts et une machine utilisant ces ressorts.

De tels agencements donnent satisfaction pour des applications relativement lourdes dans lesquelles le nombre de ressorts utilisé est très important.

Il existe par contre une gamme d'applications pour lesquels le problème n'est pas parfaitement résolu.

En effet, pour certaines domaines qui ne requièrent qu'un nombre limité de ressorts, l'investissement, l'immobilisation, l'encombrement, la maintenance d'une machine à fabriquer les ressorts sont d'un coût rédhibitoire par rapport à la fabrication et il est donc exclus de disposer dans un tel cas d'une machine à fabriquer des ressorts.

Aussi, il est prévu des tubes de courte longueur, sensiblement rectilignes dans lesquels des ressorts sont introduits par une machine à fabriquer les ressorts et une fois le tube rempli, celui-ci sert de cartouche d'alimentation pour un dispositif de mise en place des ressorts du type stylo distributeur.

On sépare ainsi le lieu de fabrication des ressorts du lieu d'utilisation.

Ces tubes ont nécessairement une courte longueur car l'introduction des ressorts se fait comme indiqué précédemment à la sortie de la machine à fabriquer des ressorts par une injection d'air comprimé en plus de l'effet de gravité.

La longueur du tube à remplir est auto-limitée par les capacités de migration des ressorts à l'intérieur du tube.

Des essais ont montré qu'une telle longueur est limitée à quelques mètres.

Les cartouches ainsi fabriquées sont mises en place sur les moyens distributeurs et régulièrement changées.

Il se trouve que les besoins de l'industrie peuvent se situer entre une consommation pour laquelle les cartouches donnent satisfaction et une consommation correspondant aux capacités d'une machine de débit d'une machine à fabriquer les ressorts.

Dans ce cas, l'investissement doit être limité mais le changement de cartouche trop régulier est fastidieux et d'un prix de revient élevé.

Aussi, la présente invention vise à pallier ces inconvénients et propose un dispositif de chargement et de distribution de ressorts, de capacité intermédiaire, comprenant une cartouche de plusieurs mètres qui est réutilisable et rechargeable, qui peut être connectée aux moyens de mise en place de type connu, qui est adaptable du plus petit diamètre de ressort qui va de quelques dixièmes de millimètres au diamètre intermédiaire de quelques millimètres, qui ne requiert qu'un équipement limité pour sa mise en oeuvre et qui est d'un prix de revient peu élevé.

A cet effet, le dispositif de chargement et de distribution de ressorts en continu selon l'invention comprend des caractéristiques telles que définies dans la revendication 1.

Selon une caractéristique particulière de l'invention, les ressorts sont orientés dans le même sens au sein d'un même tube.

Le tube selon l'invention a un diamètre supérieur au diamètre du ressort de façon à laisser un jeu autorisant les déplacements des ressorts.

De ce fait, le tube a nécessairement un coefficient de frottement limité de façon à faciliter les déplacements desdits ressorts en translation le long du tube.

Un tel tube sera avantageusement en polyéthylène et le jeu sera compris entre 0,2 et 1 mm.

Quant au support, selon une caractéristique de l'invention, il comprend une bobine qui reçoit le tube en enroulement.

Les moyens vibrants quant à eux ont une polarité donnée pour une orientation donnée des ressorts et de façon avantageuse, selon un mode de réalisation particulier de l'invention ces moyens vibrants comprennent un inverseur de polarité de façon à provoquer la migration des ressorts dans le tube dans un sens ou dans l'autre pour une même orientation des ressorts.

La présente invention a également pour objet le conditionnement de ces ressorts, chargés au moyen de ce dispositif et ce conditionnement comprenant des caractéristiques selon la revendication 9.

La présente invention est décrite ci-après selon un mode particulier de réalisation en regard des dessins annexés sur lesquels :
- la figure 1 représente une vue en élévation latérale d'un dispositif de chargement et de distribution de ressorts selon l'invention,
- la figure 2 représente un synoptique a, b, c et d de chargement et de distribution correspondant à la mise en oeuvre du dispositif, et
- la figure 3 représente une vue en élévation latérale d'un conditionnement selon l'invention monté sur un vibreur.

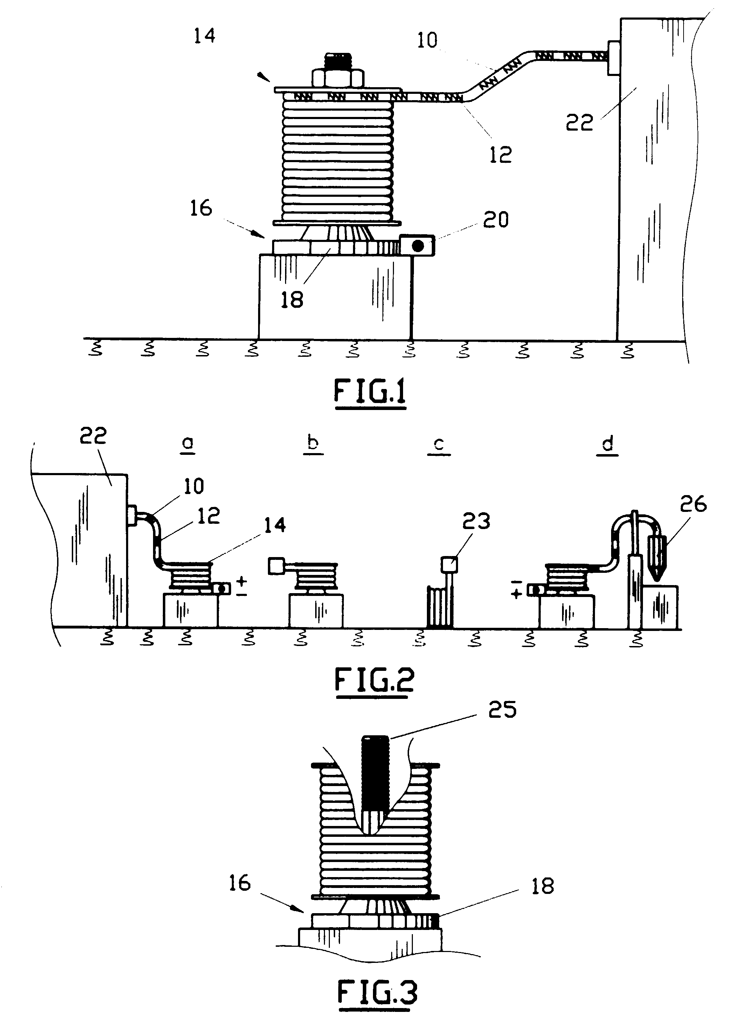

Sur la figure 1 on a représenté un dispositif de chargement et de distribution chargement de ressorts en continu qui comprend un tube souple 10, dans lequel les ressorts 12 sont juxtaposés, ce tube étant enroulé autour d'une bobine 14, disposée sur des moyens vibrants 16.

Le diamètre intérieur du tube est supérieur au diamètre du ressort de façon à laisser un jeu autorisant les déplacements de ce ressort à l'intérieur du tube.

Le tube est plus particulièrement réalisé en polyéthylène et le jeu varie de quelques dixièmes de millimètres à quelques millimètres et il est plus particulièrement compris entre 0,2 et 1 mm.

Les ressorts sont tous orientés au sein du tube dans la même direction avec un sens d'enroulement identique.

Le rayon de courbure du tube une fois enroulé sur la bobine doit également permettre la circulation des ressorts, il convient que le rayon de courbure ne soit pas trop prononcé et pour donner un ordre d'idée, un rayon minimal de 15 cm permet avec une tube d'un diamètre interne de 4 mm, de faire circuler des ressorts ayant un diamètre de 3 mm et une longueur de 25 mm.

La bobine est disposée sur les moyens vibrants. Ces moyens vibrants comprennent un vibreur 18 de type connu avec électro-aimant ou bien une masselotte montée excentrée.

Ce vibreur comprend également un inverseur de polarité 20 qui permet de modifier la direction des vibrations obtenues.

Le fonctionnement du dispositif selon l'invention est décrit en regard du synoptique de la figure 2, en accord avec la figure 1.

Sur la figure 2a, on a représenté une machine à fabriquer des ressorts 22 à la sortie de laquelle est connecté le tube 10 prévu pour recevoir les ressorts 12 ainsi fabriqués.

Ce tube de grande longueur est donc enroulé sur la bobine 14.

Le vibreur est mis en marche de façon que les ressorts se déplacent dans le tube sous l'effet des vibrations.

Les ressorts se déplacent à la façon d'une "vis" et suivant la direction de vibration, si bien que celle-ci étant choisie et déterminée, les ressorts progressent à l'intérieur du tube jusqu'à ce qu'ils viennent en butée sur l'extrémité enroulée du tube, les ressorts suivants butant sur le ressort précédent au fur et à mesure du chargement. La bobine complétée est représentée sur la figure 2b.

Sur la figure 2c, on a représenté le conditionnement seul, avec l'extrémité libre du tube munie de moyens de connexion assurant temporairement la fermeture du tube.

Le conditionnement comprend donc la bobine, avec le tube enroulé dans lequel sont disposés des ressorts. Cette bobine peut être manipulée aisément et elle est transportée sur un lieu d'utilisation à la façon d'une recharge comme sur la figure 2c.

Sur la figure 2d, cette bobine est mise à nouveau sur un vibreur et elle comprend à cet effet des moyens de fixation qui sont décrits plus en détail sur la figure 3.

Ces moyens de fixation comprennent un mandrin 25 intérieur passant à travers les deux flasques de la bobine qui viennent bloquer cette bobine et la solidariser avec ce mandrin, le mandrin étant lui-même relié à l'appareil.

Sur la figure 2, à l'étape 2d, une fois la bobine et le tube mis en place on relie à l'aide des moyens de raccordement 24 l'extrémité libre du tube sur un dispositif distributeur 26 du type stylo distributeur monté en automatique sur une machine de pose.

Dès que le stylo distributeur est actionné par la machine de pose, il suffit de mettre en marche simultanément le vibreur, avec une polarité inverse de celle du chargement, si bien que les ressorts migrent dans le sens intérieur-extérieur, et qui correspondrait au "dévissage", ce qui autorise une alimentation en continu du stylo distributeur malgré la très grande longueur du tube.

Le dispositif selon l'invention est d'une grande simplicité, d'une grande fiabilité seul le vibreur peut tomber en panne et il peut être immédiatement changé de même si un conditionnement venait à ne pas fonctionner pour un défaut quelconque du tube, il suffit de changer le conditionnement pour ne pas interrompre l'alimentation de la machine de pose.

Un tel dispositif et le conditionnement obtenus sont très simples d'utilisation et peuvent s'insérer très utilement dans les systèmes intermédiaires utilisés par certaines industries et ceci avec une grande efficacité.

## Revendications

1. Dispositif de chargement, de transport de distribution de ressorts (12) hélicoïdaux en continu comprenant un premier moyen vibrant (16) et un second moyen vibrant (16) et un tube souple (10) dans lequel les ressorts sont juxtaposés coaxialement, le tube (10) étant de grande longueur et enroulé sur un support amovible (14), le premier moyen vibrant (16) étant pourvu de moyens de fixation (25) de ce support amovible (14), pour le chargement des ressorts, ce tube ayant à sa seule extrémité libre des moyens de connexion à une machine (22) à fabriquer les ressorts, et le second moyen vibrant (16), du même type que le premier moyen vibrant mais distinct de celui-ci, étant pourvu également de moyens de fixation (25) de ce support amovible, les moyens de connexion du tube étant connectables également à une machine (26) à distribuer les ressorts, notamment un stylo distributeur.

2. Dispositif de chargement, de transport et de distribution selon la revendication 1, caractérisé en ce que le support est une bobine (14) qui reçoit le tube (10) en enroulement.

3. Dispositif de chargement, de transport et de distribution selon la revendication 1 ou 2, caractérisé en ce que les ressorts (12) sont orientés et avec un sens d'enroulement identique au sein d'un même tube (10).

4. Dispositif de chargement, de transport et de distribution selon l'une quelconque des revendications précédentes, caractérisé en ce que le diamètre du tube (10) est supérieur au diamètre du ressort (12) de façon à laisser un jeu autorisant les déplacements du ressort (12) au sein du tube (10).

5. Dispositif de chargement, de transport et de distribution selon l'une quelconque des revendications précédentes, caractérisé en ce que le tube (10) a un coefficient de frottement limité de façon à faciliter les déplacements en translation desdits ressorts (12) le long du tube (10).

6. Dispositif de chargement, de transport et de distribution selon la revendication 4 ou 5, caractérisé en ce que le tube (10) est en polyéthylène et le jeu est compris entre 0,2 et 1 mm.

7. Dispositif de chargement, de transport et de distribution selon l'une quelconque des revendications précédentes, caractérisé en ce que les moyens vibrants (16) ont une polarité donnée pour un sens d'enroulement hélicoïdal donné des ressorts (12) et comprenant un inverseur de polarité de façon à provoquer l'introduction ou l'évacuation des ressorts (12) du tube (10) pour un même sens d'enroulement de ces ressorts (12).

8. Dispositif de chargement, de transport et de distribution selon la revendication 7, caractérisé en ce que les vibrations sont émises dans un plan perpendiculaire à l'axe de la bobine (14).

9. Conditionnement de ressorts (12) chargés au moyen du dispositif de chargement, de transport et de distribution selon l'une quelconque des revendications 1 à 8, le conditionnement comprenant une bobine (14) support amovible munie de moyens de fixation (25) sur un vibreur (18) ainsi qu'un tube souple (10) de grande longueur enroulé autour de la bobine (14), le tube comprenant à son extrémité libre des moyens de connexion (24) avec une machine à fabriquer des ressorts (22) et avec des moyens distributeurs de ressorts (26), notamment un stylo distributeur.

## Patentansprüche

1. Vorrichtung zum kontinuierlichen Laden, Transportieren und Zuteilen von Schraubenfedern (12), umfassend ein erstes Vibrationsmittel (16) und ein zweites Vibationsmittel (16) und einen weichen Schlauch (10), in dem die Federn koaxial nebeneinander angeordnet werden, wobei der Schlauch (10) von großer Länge und auf einem abnehmbaren Träger (14) aufgerollt ist, wobei das erste Vibrationsmittel (16) mit Befestigungsmitteln (25) für den abnehmbaren Träger (14) versehen ist, wobei zum Laden von Federn der Schlauch an seinem freien Ende Mittel zum Verbinden mit einer Maschine (22) zum Herstellen der Federn aufweist, und das zweite Vibrationsmittel (16) vom gleichen Typ wie das erste Vibrationsmittel, jedoch verschieden hiervon ebenfalls mit Mitteln (25) zum Befestigen an dem abnehmbaren Träger versehen ist, wobei die Mittel zum Verbinden des Schlauchs ebenfalls mit einer Maschine (26) zum Verteilen von Federn, insbesondere einem Schreibstiftzuteiler verbindbar ist.

2. Vorrichtung zum Laden, Transportieren und Zuteilen nach Anspruch 1, dadurch gekennzeichnet, daß der Träger eine Bobine (14) ist, die den Schlauch (10) aufgerollt aufnimmt.

3. Vorrichtung zum Laden, Transportieren und Zuteilen nach Anspruch 1 oder 2, dadurch gekennzeichnet, daß die Federn (12) orientiert und mit einer identischen Wickelrichtung im Innern eines gleichen Schlauchs (10) angeordnet sind.

4. Vorrichtung zum Laden, Transportieren und Zuteilen nach einer der vorhergehenden Ansprüche, dadurch gekennzeichnet, daß der Durchmesser des Schlauchs (10) größer als der Durchmesser der Federn (12) ist, so daß ein Spiel verbleibt, das die Verschiebung der Federn (12) im Innern des Schlauchs (10) ermöglicht.

5. Vorrichtung zum Laden, Transportieren und Zuteilen nach einer der vorhergehenden Ansprüche, dadurch gekennzeichnet, daß der Schlauch (10) einen Reibungskoeffizienten hat, der derart begrenzt ist, daß die Translationsverschiebungen der Schrauben (12) längs des Schlauchs (10) erleichtert werden.

6. Vorrichtung zum Laden, Transportieren und Zuteilen nach Anspruch 4 oder 5, dadurch gekennzeichnet, daß der Schlauch (10) aus Polyethylen ist und das Spiel zwischen 0,1 und 1 mm liegt.

7. Vorrichtung zum Laden, Transportieren und Zuteilen nach einer der vorhergehenden Ansprüche, dadurch gekennzeichnet, daß die Vibrationsmittel (16) eine gegebene Polarität für einen Schraubenwickelsinn von Federn (12) haben und einen Polaritätsumkehrer derart umfassen, daß das Befüllen oder Entleeren des Schlauch (10) von Federn (12) für einen gleichen Wickelsinn dieser Federn (12) bewirkt wird.

8. Vorrichtung zum Laden, Transportieren und Zuteilen nach Anspruch 7, dadurch gekennzeichnet, daß die Vibrationen in einer Ebene senkrecht zur Achse der Bobine (14) emittiert werden.

9. Verpackung für Federn (12), die mittels einer Vorrichtung zum Laden, Transportieren und Zuteilen gemäß einem der Ansprüche 1 bis 8 geladen wurden, wobei die Verpackung eine Bobine (14), einen abnehmbaren Träger ausgerüstet mit Befestigungsmitteln (25) auf einem Vibrator (18) ebenso wie einen weichen Schlauch (10) großer Länge, der auf die Bobine (14) gerollt ist, umfaßt, wobei der Schlauch an seinem freien Ende Mittel (24) zum Verbinden mit einer Maschine (22) zur Herstellung von Federn und mit Mitteln (26) zum Zuteilen von Federn, insbesondere einem Schreibstiftzuteiler, umfaßt.

## Claims

1. Device for continously loading, transporting and distributing helical springs (12) comprising a first vibrating means (16) and a second vibrating means (16) and a flexible tube (10) in which the springs are juxtaposed coaxially, the tube (10) being long and wound around a movable support (14), the first vibrating means (16) being provided with fixing means (25) for this movable support (14), for the loading of the springs, this tube having at its only free end means of connection to a machine (22) for making springs, and the second vibrating means (16), of the same type as the first vibrating means but separate therefrom, also being provided with fixing means (25) for this movable support, the connection means for the tube also being connectable to a machine (26) for distributing springs, notably a distribution pen.

2. Loading, transport and distribution device according to Claim 1, characterised in that the support is a spindle (14) which receives the wound up tube (10).

3. Loading, transport and distribution device according to Claim 1 or 2, characterised in that the springs (12) are oriented and with an identical winding direction within the same tube (10).

4. Loading, transport and distribution device according to any one of the preceding claims, characterised in that the diameter of the tube (10) is bigger than the diameter of the spring (12) so as to leave a clearance which allows the spring (12) to move within the tube (10).

5. Loading, transport and distribution device according to any one of the preceding claims, characterised in that the tube (10) has a friction coefficient limited so as to facilitate translational movements of the said springs (12) along the tube (10).

6. Loading, transport and distribution device according to Claim 4 or 5, characterised in that the tube (10) is made of polyethylene and the clearance is between 0.2 and 1 mm.

7. Loading, transport and distribution device according to any one of the preceding claims, characterised in that the vibrating means (16) have a given polarity for a given helical winding direction of the springs (12) and comprising a polarity reverser so as to cause the springs to be inserted or evacuated (12) from the tube (10) in the same winding direction of these springs (12).

8. Loading, transport and distribution device according to Claim 7, characterised in that the vibrations are emitted in a plane perpendicular to the axis of the spindle (14).

9. Packaging of springs (12) loaded by means of the loading, transport and distribution device according to any one of Claims 1 to 8, the packaging comprising a movable support spindle (14) provided with means of fixing (25) onto a vibrator (18) and a long flexible tube (10) wound around the spindle (14), the tube comprising at its free end connection means (24) with a machine for fabricating springs (22) and with spring distribution means (26), notably with a distribution pen.
